# EUROPÄISCHE PATENTSCHRIFT

(11) **EP 2 912 933 B1**
(45) Veröffentlichungstag und Bekanntmachung des Hinweises auf die Patenterteilung: **31.01.2018**
(21) Anmeldenummer: 14196229.0
(22) Anmeldetag: 04.12.2014
(51) Int. Cl.: A01C 7/20, A01C 7/04, A01C 7/08

(54) **Landwirtschaftliche Bodenbearbeitungsmaschine**
Agricultural soil cultivation machine
Machine agricole de traitement du sol

(30) Priorität: 28.02.2014 DE 102014002911
(43) Veröffentlichungstag der Anmeldung: 02.09.2015
(73) Patentinhaber: PÖTTINGER Landtechnik GmbH, 4710 Grieskirchen (AT)
(72) Erfinder: Kraus, Hans Georg, 4653 Eberstalzell (AT); Preimeß, Hans-Jörg, 9811 Lendorf (AT)
(74) Vertreter: Thoma, Michael

(56) Entgegenhaltungen:
- EP-B1- 1 911 340
- DE-A1- 4 108 210
- DE-A1-102004 043 565
- DE-A1-102007 010 626
- DE-B3-102007 053 001
- DE-U1- 29 910 414
- US-A- 4 977 841

## Beschreibung

Die vorliegende Erfindung betrifft eine landwirtschaftliche Bodenbearbeitungsmaschine, insbesondere Sämaschine, mit zumindest einer Reihe von Scharwerkzeugen, die mittels Schartragarmen an einem Rahmenträgerteil elastisch, unter Wirkung einer Bodenandruckkraft nachgiebig gelagert sind.
Eine solche landwirtschaftliche Bodenbearbeitungsmaschine ist beispielsweise aus der Schrift DE 41 08 210 A1 bekannt, wobei dort Säschare in sich jeweils seitenflexibel gestaltet und von mindestens einer auf einer Querschiene angeordneten Spiralfeder vertikal und seitwärts federnd gehalten sind. Weitere, ähnliche Bodenbearbeitungsmaschinen sind aus den Schriften DE 10 2004 043 565 A1, US 4,977,841, DE 299 10 414 U1 und DE 10 2007 010 626 A1 bekannt. Sämaschinen umfassen regelmäßig eine oder mehrere Reihen von Scharwerkzeugen beispielsweise in Form von Scharscheiben, die den Boden für das Ausbringen von Saatgut bereiten, beispielsweise eine Säfurche ziehen, in die das Saatgut abgelegt wird. Werden in der vorgenannten Weise Scharscheiben verwendet, können diese drehbar gelagert und zur Fahrtrichtung sowie zur Horizontalen leicht schräg verkippt angeordnet sein, wobei grundsätzlich jedoch auch andere Scharwerkzeuge eingesetzt werden können. Ähnliche Scharwerkzeuganordnungen werden auch bei anderen Bodenbearbeitungsmaschinen wie Scheibeneggen eingesetzt.
Um den Bodenkonturen besser folgen und evtl. Hindernissen wie Steinen ausweichen zu können, sind die Scharwerkzeuge vorteilhafterweise mittels Schartragarmen an einem Rahmenträgerteil elastisch, unter Wirkung einer Bodenandruckkraft nachgiebig gelagert, so dass die Scharwerkzeuge elastisch nach oben ausgelenkt und nach unten zurückgestellt werden können, wenn die Bodenbearbeitungsmaschine über eine wellige Bodenkontur fährt oder das jeweilige Scharwerkzeug auf einen Stein trifft. Die genannten Schartragarme, die sich beispielsweise schräg zur Horizontalen geneigt nach hinten unten erstrecken und an ihrem unteren Ende das Scharwerkzeug tragen können, sind dabei bisweilen mittels Gummiquetschlagern elastisch bzw. beweglich an einem Rahmenträgerteil aufgehängt, wobei die genannten Gummiquetschlagerelemente in Zwischenräumen zwischen einem Lagerkopf des jeweiligen Scharträgers und dem genannten Rahmenträgerteil angeordnet sein können. Beispielsweise kann der Schartragarm-Lagerkopf hülsenförmig ein sich quer zur Fahrtrichtung erstreckendes, liegendes Rahmenträgerteil umgreifen und dabei wie das Rahmenträgerteil einen von der Kreisform abweichenden Querschnitt bzw. eine entsprechende mantelflächenseitige Konturierung umfassen, so dass sich für die Gummiquetschlagerelemente Aufnahmetaschen ergeben, deren Querschnittskontur sich bei Verschwenken bzw. Bewegen der Schartragarme verändern und eine entsprechende Verformung der Gummiquetschlagerelemente implizieren.

Mit einer solchen elastischen Aufhängung mittels Gummiquetschlagerelementen lässt sich eine wartungsfreie Drehlagerung und darüber hinaus auch eine Vorspannung des Systems bewirken. Neben der genannten Wartungsfreiheit ist dabei auch das elastische Verhalten infolge von Seitenkräften, die beispielsweise durch Schrägstellung der Scharscheiben auftreten können, von Vorteil.

Die mit solchen Gummilagern erzielbaren Vorspannkräfte und die damit einhergehenden Bodenandruckkräfte der Scharwerkzeuge lassen sich jedoch nicht ohne weiteres an verschiedene Gegebenheiten anpassen und verändern. Zwar wurde bereits angedacht, das Rahmenträgerteil, an dem die Gummiquetschlagerelemente abgestützt sind, insgesamt um seine Längsachse zu verdrehen, um hierdurch die Schartragarme in ihre Ausgangsstellung weiter nach unten oder weiter nach oben zu stellen, was letztlich einer Höhenverstellung der gesamten Scharreihe gleichkommt. Eine solche Verstellung ist jedoch für verschiedene Aufgaben ungenügend.

Der vorliegenden Erfindung liegt daher die Aufgabe zugrunde, eine verbesserte Bodenbearbeitungsmaschine der eingangs genannten Art zu schaffen, die Nachteile des Standes der Technik vermeidet und Letzteren in vorteilhafter Weise weiterbildet. Insbesondere soll eine flexible Verstellbarkeit des Schardrucks ermöglicht werden, ohne hierfür Nachteile hinsichtlich der Wartungsfreundlichkeit und Stabilität der Aufhängung gegen Querkräfte in Kauf nehmen zu müssen.

Erfindungsgemäß wird die genannte Aufgabe durch eine Bodenbearbeitungsmaschine gemäß Anspruch 1 gelöst. Bevorzugte Ausgestaltungen der Erfindung sind Gegenstand der abhängigen Ansprüche.

Es wird also vorgeschlagen, eine partielle Verstellbarkeit für den Schardruck bzw. die Bodenandruckkraft der Scharwerkzeuge vorzusehen, so dass nicht mehr nur eine ganze Scharwerkzeugreihe gemeinsam verstellt, sondern der Schardruck an einzelnen oder mehreren Scharwerkzeugen individuell oder gruppenweise verändert und an die Erfordernisse angepasst werden kann. Erfindungsgemäß besitzt die Bodenbearbeitungsmaschine Schardruck-Einstellmittel zum individuellen Erhöhen und/oder Erniedrigen der Bodenandruckkraft von zumindest einem der Scharwerkzeuge unabhängig von der Bodenandruckkraft zumindest eines anderen der Scharwerkzeuge. Die Schardruck-Einstellmittel ermöglichen eine Veränderung des Schardrucks an einzelnen oder mehreren Scharwerkzeugen, ohne die gleiche Veränderung auch an allen anderen Scharwerkzeugen der Reihe von Scharwerkzeugen vorzusehen. Beispielsweise kann der Schardruck an einem Scharwerkzeug, an zwei Scharwerkzeugen oder an einer gewünschten Untergruppe der Reihe von Scharwerkzeugen der Schardruck erhöht werden, während der Schardruck an den übrigen Scharwerkzeugen nicht erhöht oder erniedrigt wird.

Durch die partielle und/oder individuelle Verstellbarkeit des Schardrucks an einem Scharwerkzeug, einzelnen Scharwerkzeugen oder einer Untergruppe von Scharwerkzeugen kann bei Ausbildung des Bodenbearbeitungsgeräts als Sämaschine in einfacher Weise zwischen verschiedenen Säarten umgeschaltet werden bzw. dieselbe Sämaschine für verschiedene Säverfahren Verwendung finden. Insbesondere kann beispielsweise für die herkömmliche Drillsaat an allen Scharwerkzeugen der gleiche bzw. näherungsweise ähnliche Schardruck verwendet werden, während für die Einzelkornaussaat der Schardruck partiell verstellt wird, da hierfür nur einige, ausgewählte Scharwerkzeuge benötigt werden. Insbesondere können einige, ausgewählte Scharwerkzeuge mit einem deutlich höheren Schardruck für die Einzelkornaussaat gefahren werden, was durch Betätigung der vorgenannten Schardruck-Einstellvorrichtung erreicht werden kann. Je nach den Gegebenheiten kann eine solche partielle Erhöhung des Schardrucks beispielsweise im Bereich von 110% bis 200%, vorzugsweise etwa 125% bis 150% der regulären Schardruckkraft für Drillsaat betragen. Die genannten Schartragarme sind hierbei zumindest zweistufig mit unterschiedlichen Spannkräften bzw. Vorspannungen beaufschlagt, wobei eine elastische Aufhängung der Schartragarme für eine Grundspannung sorgt und zumindest einer der Schartragarme bzw. eine gewünschte Untergruppe von Schartragarmen durch eine Zusatzspannvorrichtung mit einer Zusatzspannung gegen den Boden beaufschlagbar ist. Die Erfindung ist dadurch gekennzeichnet, dass die Zusatzspannvorrichtung zu- und abschaltbar ausgebildet ist und/oder Aktivierungs-/Deaktivierungsmittel zum wahlweisen Aktivieren und Deaktivieren der Zusatzspannvorrichtung vorgesehen sind.

Insbesondere können die genannten Schartragarme in der eingangs geschilderten Weise durch verformbare Quetschlagerelemente, insbesondere Gummiquetschlager aufgehängt sein bzw. gelagert sein. Mittels der genannten elastisch verformbaren Quetschlagerelemente kann die vorgenannte Grundspannung aufgebracht werden.

In Weiterbildung der Erfindung können die genannten Schardruck-Einstellmittel die zu- und wegschaltbare Vorspannvorrichtung bzw. Zusatzspannvorrichtung zum wahlweisen Beaufschlagen eines jeweiligen Scharwerkzeugs mit einer zusätzlichen Vorspannkraft umfassen. Wird die Vorspannvorrichtung bzw. Zusatzspannvorrichtung zugeschaltet, wirkt auf das Scharwerkzeug eine zusätzliche Spannkraft ein und erhöht dort den Schardruck. Wird indes die Vorspannvorrichtung bzw. Zusatzspannvorrichtung abgeschaltet bzw. weggeschaltet, wird das jeweilige Scharwerkzeug mit weniger Spannkraft beaufschlagt, so dass der Schardruck fällt.
Die genannte Zu- und Abschaltbarkeit kann dabei ein vollständiges Wegschalten bzw. umgekehrt ein Zuschalten der maximal möglichen Vorspannkraft meinen, so dass wahlweise 0% oder 100% der zusätzlichen Vorspannkraft auf das Scharwerkzeug gebbar ist. Alternativ kann jedoch auch ein teilweises oder auch graduelles Zu- und Abschalten im Sinne eines Erhöhen oder Erniedrigen der genannten Vorspannkraft vorgesehen sein, die die Vorspannvorrichtung bzw. Zusatzspannvorrichtung auf das Scharwerkzeug gibt. Beispielsweise können hinsichtlich ihrer Vorspannkraft stufenlos oder stufenweise veränderbare Vorspannvorrichtungen bzw. Zusatzspannvorrichtungen vorgesehen werden.
In Weiterbildung der Erfindung kann die zusätzliche Vorspannkraft zur Erhöhung des Schardrucks über die Schartragarme auf die jeweiligen Scharwerkzeuge gegeben werden. Die vorgenannten Vorspannvorrichtungen bzw. Zusatzspannvorrichtungen können auf die Schartragarme einwirken bzw. können die Schardruck-Einstellmittel den Schartragarmen zugeordnet sein.

Die Zu- und Wegschaltbarkeit der zusätzlichen Schardruckkraft kann grundsätzlich in verschiedener Weise bewerkstelligt sein. Beispielsweise könnte bei hydraulischer oder pneumatischer Ausbildung der Vorspannvorrichtungen bzw. Zusatzspannvorrichtungen der Fluiddruck vom entsprechenden Stellaktor weggeschaltet werden. Bei mechanischer Ausbildung der Vorspannvorrichtungen bzw. Zusatzspannvorrichtungen können diese vorteilhafterweise in einen Freilauf bzw. einen Freigang schaltbar ausgebildet sein, beispielsweise dadurch, dass eine den Kraftfluss übertragende Verbindung gelöst wird, beispielsweise ein Formschlusselement ausgerückt wird. Die Freigängigkeit bzw. der Freilauf kann dabei in der Vorspannvorrichtung selbst integriert ausgebildet sein, oder auch an einem der Anlenkpunkte der Vorspannvorrichtung realisiert sein, beispielsweise dergestalt, dass ein Anlenkpunkt in einem Langloch geführt und in einer bestimmten Stellung blockiert werden kann oder ein den Anlenkpunkt tragendes Anlenkstück wahlweise freigängig schaltbar oder sperrbar ist.
Vorteilhafterweise können die Schardruck-Einstellmittel nicht nur die genannte zusätzliche Vorspannkraft zuschalten und wegschalten, sondern auch die Größe der zugeschalteten Vorspannkraft verändern und auf ein gewünschtes Maß einstellen. Ein entsprechender Kraftregler oder -steuermittel kann beispielsweise bei hydraulischer oder pneumatischer Ausbildung der Vorspannvorrichtungen bzw. Zusatzspannvorrichtungen Drucksteuermittel zum Einstellen des Fluiddrucks, oder bei mechanischer Ausbildung der Vorspannvorrichtungen bzw. Zusatzspannvorrichtungen einen verstellbaren Federspanner umfassen, oder auch eine Verstellung zumindest eines der Anlenkpunkte der Vorspannvorrichtung und Fixierbarkeit in verschiedenen Stellungen umfassen.

Die genannten Vorspannvorrichtungen bzw. Zusatzspannvorrichtungen können dabei in Weiterbildung der Erfindung insbesondere eine Federeinrichtung umfassen, die an einem jeweiligen Schartragarm und einem rahmenträgerseitigen Abstützteil anlenkbar ist derart, dass die von der Federeinrichtung ausgeübte Federkraft auf den Schartragarm gebbar ist, um das am Schartragarm befestigte Scharwerkzeug gegen den Boden zu drücken.
In Weiterbildung der Erfindung kann eine solche Federeinrichtung einem jeweiligen Schartragarm einzeln zugeordnet sein, so dass die von der Federeinrichtung ausgeübte Federkraft nur auf diesen einen Schartragarm wirkt. Alternativ wäre auch eine paar- oder gruppenweise Beaufschlagung durch die Federeinrichtung möglich, beispielsweise dahingehend, dass zwei benachbarte Schartragarme von einer gemeinsamen Federeinrichtung oder einer gemeinsamen Vorspanneinrichtung beaufschlagt werden können.

Die genannte Federeinrichtung kann in Weiterbildung der Erfindung mechanisch ausgebildet sein, beispielsweise nach Art eines Federbeins. Alternativ oder zusätzlich zu mechanischen Federmitteln kann die Federeinrichtung aber auch eine Druckfluidfeder beispielsweise in Form eines Stellzylinders mit daran anschließbarem Druckspeicher oder daran anschließbarer Druckquelle umfassen.

Sind in der vorgenannten Weise mehrere der Scharwerkzeuge nach Art einer Untergruppe mit dem zusätzlichen Schardruck beaufschlagbar, kann die Schardruck-Einstellvorrichtung in Weiterbildung der Erfindung ein zentrales Einstellelement aufweisen, mittels dessen der Schardruck aller Scharwerkzeuge der genannten Untergruppe zentral einstellbar ist. Werden beispielsweise in der vorgenannten Weise auf die Schartragarme einwirkende Federeinrichtungen verwendet, kann das zentrale Einstellelement gleichzeitig alle Federeinrichtungen zuschalten oder wahlweise gleichzeitig alle Federeinrichtungen wegschalten. Hierdurch kann durch nur eine Betätigung bzw. nur ein zu betätigendes Einstellelement die ganze Bodenbearbeitungsmaschine zwischen zwei Betriebsmodi umgeschaltet werden, beispielsweise zwischen Drillsaat und Einzelkornsaat.

Alternativ oder zusätzlich zu einer zentralen Verstellbarkeit der Schardruck-Steuermittel können die den jeweiligen Scharwerkzeugen bzw. Schartragarmen zugeordneten Kraftgeber auch einzeln justierbar bzw. einstellbar ausgebildet sein und/oder mit individuell betätigbaren Stellmitteln versehen sein, so dass der Schardruck an jedem der Scharwerkzeuge, dem ein Schardruck-Einstellmittel zugeordnet ist, separat verstellt werden kann.

Sind in der vorgenannten Weise zuschaltbare Vorspannvorrichtungen, beispielsweise in Form von Federeinrichtungen, vorgesehen, können die Schardruck-Einstellmittel Stellmittel zum Verstellen eines Anlenkpunktes der Vorspannvorrichtung und/oder zum Verstellen der Federlänge aufweisen. Beispielsweise können den Schartragarmen zugeordnete Federbeine mittels Steckbolzen an dem jeweiligen Schartragarm fixiert oder verschieblich angelenkt werden, beispielsweise durch Umstecken eines Bolzens in ein Absteckloch und/oder in ein Langloch, welches die Federeinrichtung zwar führt, jedoch inaktiv schaltet.

In Weiterbildung der Erfindung können die genannten Federeinrichtungen auch dadurch zugeschaltet werden, dass ein Anlenkpunkt an einem verstellbaren Anlenkstück vorgesehen ist, so dass durch Verstellen des Anlenkstücks die Federkraft zugeschaltet und weggeschaltet werden kann und/oder erhöht und erniedrigt werden kann, indem das Anlenkstück entsprechend verstellt wird. Das genannte Anlenkstück kann beispielsweise ein Schwenkhebel sein, der an dem Rahmenträgerteil angelenkt sein kann, an dem auch der Schartragarm gelagert ist.

Dabei kann beispielsweise durch einen Freilauf, in den das genannte Anlenkstück und/oder der andere Anlenkpunkt der Vorspannvorrichtung schaltbar ist und in dem das Anlenkstück und/oder der Anlenkpunkt frei beweglich ist, die Federwirkung bzw. die Vorspannwirkung deaktiviert werden. Wird das genannte Anlenkstück indes zugestellt und in der zugestellten Stellung fixiert, ist die Vorspanneinrichtung bzw. die Federeinrichtung aktiviert.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische, schematische Darstellung einer Bodenbearbeitungsmaschine in Form einer Sämaschine, die mehrere Reihen von Scharwerkzeugen in Form von Säscharen aufweist,
- Fig. 2:: eine Seitenansicht der Sämaschine aus Fig. 1, die die Säschare und deren Aufhängung am Maschinenrahmen zeigt,
- Fig. 3:: eine ausschnittsweise, vergrößerte Darstellung der Scharwerkzeuge und deren Aufhängung gemäß der Bodenbearbeitungsmaschine aus den vorhergehenden Figuren in einer Seitenansicht, wobei eine den Schardruck an einem Scharwerkzeug erhöhende Federeinrichtung zugeschaltet bzw. aktiviert ist und das Scharwerkzeug in einer abgesenkten Stellung gezeigt ist,
- Fig. 4:: eine Seitenansicht der Scharwerkzeuge ähnlich Fig. 3, wobei das mit zusätzlicher Vorspannkraft durch die Federeinrichtung beaufschlagte Scharwerkzeug in einer ausgehobene bzw. angehobenen Stellung gezeigt ist, in der die Federeinrichtung eine Längung erfahren hat,
- Fig. 5:: eine Seitenansicht der Scharwerkzeuge ähnlich den Figuren 3 und 4, wobei die Federeinrichtung zur Erzeugung des zusätzlichen Schardrucks in einer deaktivierten Stellung gezeigt ist und sich das Scharwerkzeug in einer abgesenkten Stellung befindet, in der die Federeinrichtung wegschaltbar bzw. lösbar ist, und
- Fig. 6:: eine Seitenansicht der Scharwerkzeuge aus den vorhergehenden Figuren, wobei die Federeinrichtung nach Lösen eines Befestigungsbolzens weggeschaltet ist und sich das Scharwerkzeug in einer weiter nach oben verfahrenen Stellung befindet.

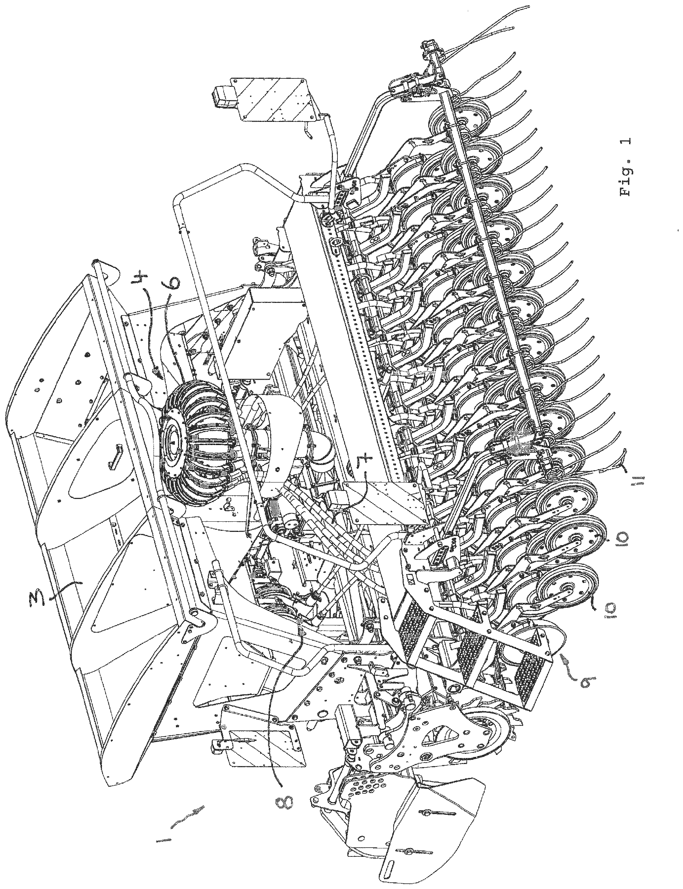

Wie Fig. 1 zeigt, kann die Bodenbearbeitungsmaschine als Sämaschine und/oder Gerätekombination ausgebildet sein, bei der ein Sämodul auf einer Bodenbearbeitungsbaugruppe sitzt. Die genannte Bodenbearbeitungsmaschine 1 kann dabei als Anbaugerät ausgebildet sein, das über eine Anlenkvorrichtung beispielsweise umfassend einen Anbaubock 2 und eine an sich übliche Dreipunktanlenkung an ein Zugfahrzeug beispielsweise in Form eines nicht gezeigten Schleppers angebaut werden kann.

Die Sämaschine kann dabei einen Saatgut- und/oder Düngemitteltank 3 umfassen, aus dem Saatgut und/oder Düngemittel über ein Verteilsystem 4 zu einer Vielzahl von Ausbringelementen 5 führbar ist, die quer zur Fahrtrichtung über die Maschinenbreite verteilt angeordnet sein können. Das genannte Verteilersystem 4 kann beispielsweise einen pneumatisch arbeitenden Verteilerkopf 6 umfassen, von dem über Saatgut- und/oder Düngemittelleitungen 7 das Saatgut oder das Düngemittel zu den jeweiligen Ausbringelementen geführt wird.

Alternativ oder zusätzlich kann das Verteilersystem 4 eine Körnervereinzelungsvorrichtung 8 umfassen, mittels derer Körner einzeln in definiertem Abstand voneinander abgegeben werden können.

Über die genannten Körnervereinzelungsvorrichtung 8 können insbesondere Körner wie beispielsweise Maissaatkörner in definiertem Abstand in Einzelkornablage ausgesät werden, wobei die genannte Körnervereinzelungsvorrichtung 8 über entsprechende Leitungen mit den Ausbringelementen verbunden sein kann. Die Körnervereinzelungsvorrichtung könnte grundsätzlich unten liegend am Säschar vorgesehen sein, um mehr Platz zu haben, kann aber auch oben liegend im Bereich des Sätanks angeordnet sein, wie dies Fig. 1 zeigt.

In vorteilhafter Weiterbildung der Erfindung kann die Maschine sowohl die genannte Körnervereinzelung als auch eine Verteilvorrichtung für Drillsaat aufweisen, da die Maschine vorteilhafterweise zwischen beiden Betriebsmodi umschaltbar ist, wie noch erläutert wird. Dabei wird bei Drillsaat das Saatgut im Wesentlichen über alle Ausbringelemente über die ganze Maschinenbreite ausgebracht, während bei Einzelkornablage nur einige der Säschare benutzt werden.

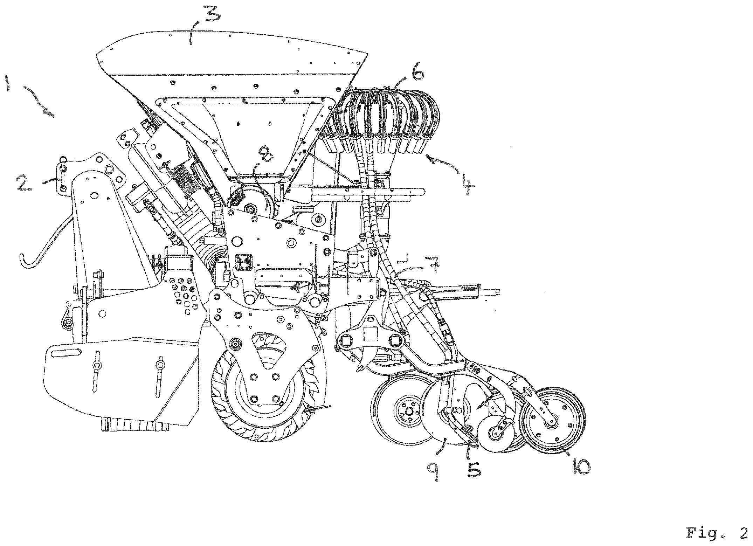

Wie die Figuren 1 und 2 zeigen, umfasst die Bodenbearbeitungsbaugruppe zwei Reihen von Scharwerkzeugen 9, die jeweils eine drehbar gelagerte Scharscheibe umfassen können, deren Drehachse - grob gesprochen - quer zur Fahrtrichtung liegend angeordnet sein kann. An den Scharscheiben können die Fallrohre der Saatgut- bzw. Düngemitteleitungen enden, so dass das Saatgut in der von der jeweiligen Scharscheibe gezogenen Furche ablegbar ist. Den Scharwerkzeugen 9 nachgeordnet können Andruckrollen 10 vorgesehen sein, mittels derer das Saatgut am Boden festgedrückt wird. Zustreicher 11 können den genannten Andruckrollen 10 nachlaufen.
Die genannten Scharwerkzeuge 9 können dabei vorteilhafterweise mittels Schartragarmen 12 elastisch nachgiebig aufgehängt sein, so dass sie zumindest begrenzte Auf- und Abbewegungen ausführen können, beispielsweise um Steinen auszuweichen oder welligen Bodenkonturen besser folgen zu können.

Die genannten Schartragarme 12 können hierzu einerseits die genannten Scharwerkzeuge 9 tragen und andererseits an einem Rahmenträgerteil 13 angelenkt sein, von dem aus sich die genannten Schartragarme 12 - grob gesprochen - schräg zur Horizontalen geneigt nach hinten/unten erstrecken können. Dabei kann ein Schartragarme 12 ein Scharwerkzeug 9 oder auch ein Paar von solchen Scharwerkzeugen 9 tragen, beispielsweise in Form einer Doppelscheibenanordnung.
Die Rahmenträgerteile 13, an denen die Schartragarme 12 gelagert sind, können in Form länglicher Profilstücke ausgebildet sein, die sich quer zur Fahrtrichtung liegend erstrecken können, wobei für die Scharwerkzeuge einer Reihe ein gemeinsames, durchgehendes, sich über die Maschinenbreite erstreckendes Rahmenträgerteil 13 oder auch ein aus mehreren Stücken bestehendes Rahmenträgerteil vorgesehen sein kann.
Die Schartragarme 12 sind an dem genannten Rahmenträgerteil 13 vorteilhafterweise mittels einer elastischen Quetschelementelagerung 21 angelenkt, wobei der Schartragarm einen grob gesprochen hülsenförmigen Lagerkopf aufweisen kann, der das genannte Rahmenträgerteil umgreift, so dass die Rahmenträgerteil-Längsachse eine Dreh- bzw. Schwenkachse für die Schartragarme 12 bildet. Das genannte Rahmenträgerteil 13 sowie der dieses umgreifende Lagerkopf der Schartragarme besitzen dabei eine von der Kreisform abweichende Konturierung bzw. einen von der Kreisform abweichenden Profilquerschnitt, so dass sich zwischen dem hülsenförmigen Lagerkopf und dem Rahmenträgerteil 13 spaltförmige Aufnahmetaschen für elastische Quetschlagerelemente bilden, beispielsweise in Form von grob gesprochen zylindrischen oder auch anders konturierten Gummiquetschelementen, die sich bei Verschwenken der Schartragarme 12 verformen und dabei entsprechende Rückstellkräfte erzeugen.
Die Schartragarme 12 können hierbei einzeln oder auch paarweise oder in anderen Untergruppen zusammengefasst an dem genannten Rahmenträgerteil 13 gelagert sein.

Die genannte elastische Gummilagerung 21 ist dabei grundsätzlich für alle Schartragarme 12 vorgesehen. Zusätzlich können einige, ausgewählte Schartragarme 12 zusätzlich mittels Kraftgebern beaufschlagt werden, um den Schardruck an den entsprechenden Scharwerkzeugen steuern, insbesondere erhöhen zu können. Insbesondere sind die Schartragarme 12 mit einem erhöhten Schardruck beaufschlagbar, die für die Einzelkornablage vorgesehen sind, da bei Einzelkornablage ein höherer Schardruck vorteilhaft ist als dies bei Drillsaat der Fall ist.
Die dieser Untergruppe der Scharwerkzeuge 9 zugeordnete Schardruck-Einstellvorrichtung 20 umfasst insbesondere Vorspannvorrichtungen 14, 22 zum Beaufschlagen der jeweiligen Schartragarme 12 mit einer zusätzlichen Vorspannkraft auf den Boden zu, um den Schardruck entsprechend zu erhöhen.

Die genannten Vorspannvorrichtungen 14, 22 können hierbei als Federeinrichtungen 15 ausgebildet sein, die beispielsweise in Form von mechanischen Federn ausgebildet sein können, wobei hier je nach Anordnung der Federeinrichtung 15 Zug- oder Druckfedern gleichermaßen Verwendung finden können. Die genannte Federeinrichtung 15 kann insbesondere in Form mechanischer Federn ausgebildet sein.

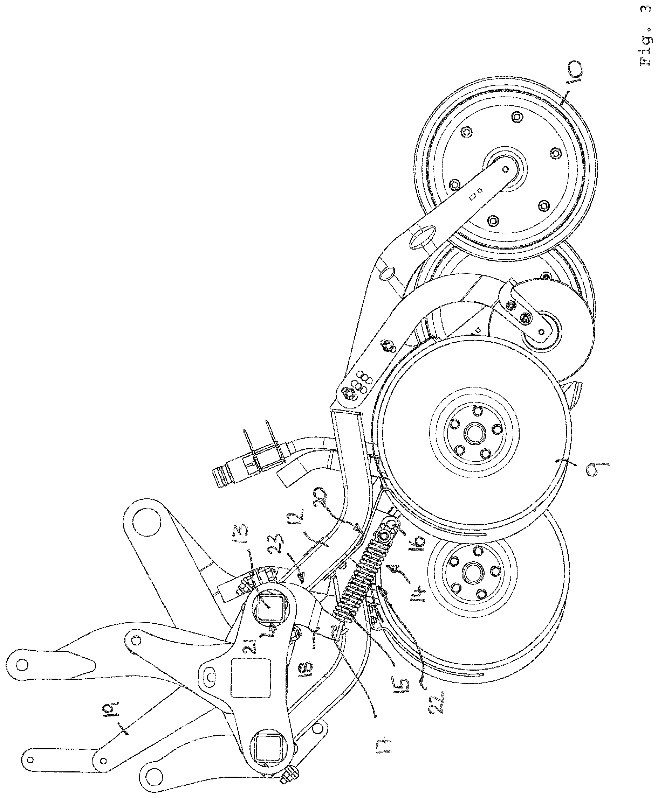

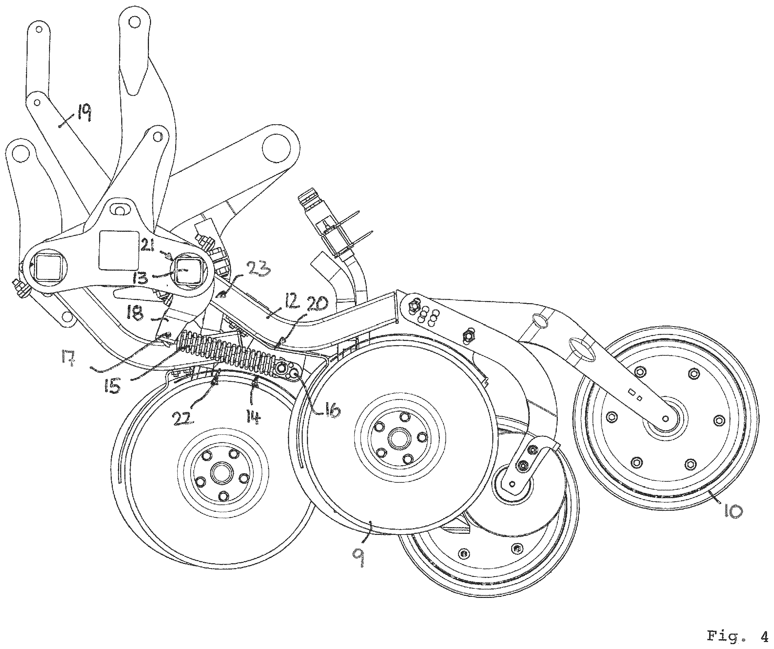

Wie Fig. 3 oder auch die Figuren 4, 5 und 6 zeigen, kann die genannte Federeinrichtung 15 einerseits mit einem Anlenkpunkt 16 an dem jeweiligen Schartragarm 12 bzw. einem damit verbundenen Anlenkstück angelenkt sein und andererseits mit einem Anlenkpunkt 17 an einem rahmenträgerseitigen Anlenkteil 18 angelenkt sein, welches Anlenkteil 18 an dem Rahmenträgerteil 13 abgestützt bzw. daran gelagert oder befestigt sein kann.

Die Anlenkpunkte 16 und 17 sind dabei derart gewählt, dass die von der Federeinrichtung 15 ausübbare Federkraft den jeweiligen Schartragarm 12 zu verschwenken versucht derart, dass das daran befestigte Scharwerkzeug 9 stärker gegen den Boden gedrückt wird.

Die von der Federeinrichtung 15 ausübbare Federkraft ist dabei zuschaltbar und wegschaltbar und vorteilhafterweise auch in der Höhe justierbar, wenn sie zugeschaltet ist.

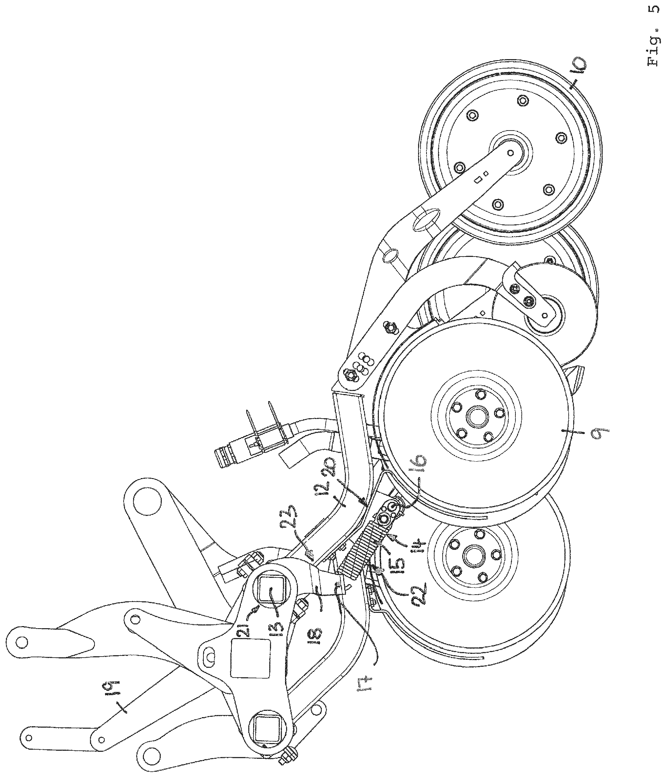

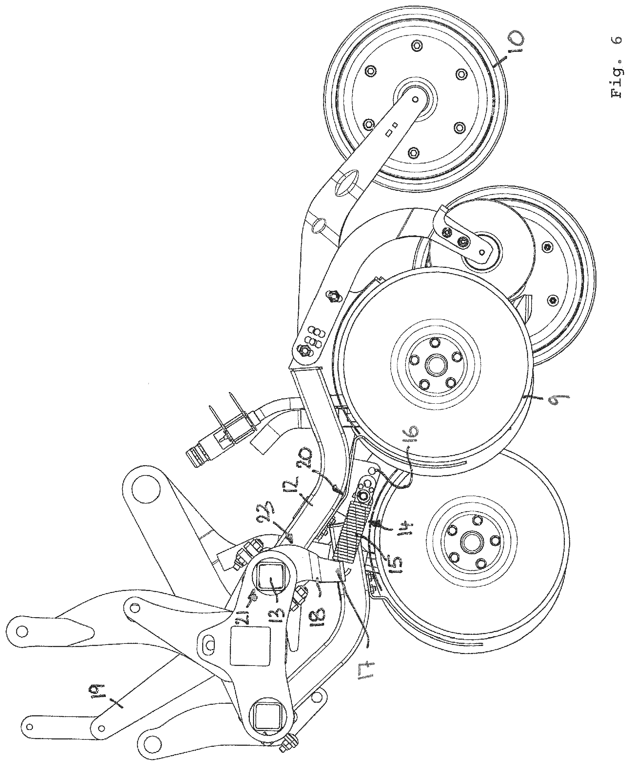

Die entsprechenden Zu-/Wegschaltmittel zum Aktivieren und/oder Deaktivieren der Vorspannvorrichtung 14 kann dabei in einfacher Ausgestaltung ein Lösen und/oder Verschieblich-Machen eines der vorgenannten Anlenkpunkte 16 und 17 vorsehen. Beispielsweise kann der tragarmseitige Anlenkpunkt 16 gelöst werden, beispielsweise mittels herausziehbarer Anlenkbolzen. Wie ein Vergleich der Figuren 5 und 6 zeigt, kann beispielsweise die Federeinrichtung 15 in eine bestimmten Anlenkloch durch Einstecken eines Bolzens fixiert oder eben durch Herausziehen des Bolzens auch gelöst werden, wobei die Federeinrichtung 15 dann beispielsweise in einem Langloch verschieblich geführt sein kann.

Ein solcher Freilauf des Anlenkpunktes 16 deaktiviert die Federeinrichtung 15.

Dabei wäre es auch möglich, durch Fixieren des Anlenkpunktes 16 in verschiedenen Positionen, beispielsweise durch ein entsprechendes Lochbild und Abstecken in verschiedenen Löchern die aufbringbare Vorspann- bzw. Federkraft der Höhe nach einzustellen.

Eine solche Einstellung der Federkraft kann jedoch auch durch eine Stellvorrichtung 23 erfolgen, mittels derer beispielsweise der andere Anlenkpunkt 17 in seiner Lage verstellt werden kann. Beispielsweise kann das Anlenkteil 18, an dem der Anlenkpunkt 17 der Federeinrichtung 15 vorgesehen ist, nach Art eines Schwenkhebels ausgebildet sein, der um die Achse des Rahmenträgerteils 13 verdrehbar gelagert sein kann, so dass sich der Anlenkpunkt 17 in Richtung der Wirkachse - zumindest mit einer Bewegungskomponente - verschiebt und hierdurch die Federkraft eingestellt werden kann. Der genannte Schwenkhebel 18 ist Teil der Stellvorrichtung 23 und kann beispielsweise über einen Betätigunglenker 19 und/oder einen Stellaktor fremdenergiebetätigt oder auch manuell verschwenkt werden.
Wie ein Vergleich der Figuren 3 und 5 zeigt, kann durch Einstellung der Schwenkstellung des genannten Anlenkteils 18 die von der Federeinrichtung 15 ausgeübte Vorspannkraft der Höhe nach eingestellt werden. Wenn die Schwenkstellung stufenlos verstellbar ist, kann eine stufenlose Voreinstellung des Schardrucks erreicht werden, wobei ggf. aber auch eine stufenweise oder auch nur eine einstufige Verstellbarkeit ausreichen kann.
Alternativ oder zusätzlich zu einer solchen Justage der Vorspannkraft der Federeinrichtung 15 kann die Verstellbarkeit bzw. Beweglichkeit des genannten Anlenkteils 18 auch dazu genutzt werden, um ein klemmfreies bzw. kraftarmes Lösen und Einstecken der Bolzen am gegenüberliegenden Anlenkpunkt 16 zu ermöglichen. Wird die Federeinrichtung 15 durch entsprechende Bewegung des Anlenkteils 18 entspannt, wie dies beispielsweise in Fig. 5 gezeigt ist, lässt sich der Anlenkbolzen am Anlenkpunkt 16 leicht lösen bzw. auch wieder leicht einstecken.

## Patentansprüche

1. Landwirtschaftliche Bodenbearbeitungsmaschine, insbesondere Sämaschine, mit zumindest einer Reihe von Scharwerkzeugen (9), die mittels Schartragarmen (12) an einem Rahmenträgerteil (13) elastisch, unter Wirkung einer Bodenandruckkraft nachgiebig gelagert sind, sowie Schardruck-Einstellmittel (20) zum individuellen Erhöhen und/oder Erniedrigen der Bodenandruckkraft von zumindest einem der genannten Scharwerkzeuge (9) unabhängig von der Bodenandruckkraft zumindest eines anderen der genannten Scharwerkzeuge (9), wobei die Schartragarme (12) durch eine elastische Aufhängung (21) mit einer Grundspannung zur Erzeugung eines Grundschardrucks gegen den Boden beaufschlagt sind, und zumindest einer der Schartragarme (12) durch eine Zusatzspannvorrichtung (14,22) mit einer Zusatzspannung zum Erzeugen eines zusätzlichen Schardrucks gegen den Boden beaufschlagbar ist, **dadurch gekennzeichnet, dass** die Zusatzspannvorrichtung (14, 22) zu- und abschaltbar ausgebildet ist und/oder Aktivierungs-/Deaktivierungsmittel zum wahlweisen Aktivieren und Deaktivieren der Zusatzspannvorrichtung (14, 22) vorgesehen sind.

2. Landwirtschaftliche Bodenbearbeitungsmaschine nach dem vorhergehenden Anspruch, wobei die elastische Aufhängung (21) nachgiebige Quetschlagerelemente, insbesondere Gummiquetschlager, zum elastisch nachgiebigen Lagern der Schartragarme umfasst, wobei die elastische Aufhängung (21) vorzugsweise Schwenkbewegungen der Schartragarme (12) um eine liegende Achse quer zur Fahrtrichtung zulässt.

3. Landwirtschaftliche Bodenbearbeitungsmaschine nach einem der vorhergehenden Ansprüche, wobei die Zusatzspannvorrichtung (14, 22) ein Kraftsteuermittel (23) zum stufenlosen oder stufenweisen Verstellen der Höhe der den jeweiligen Schartragarm beaufschlagenden Zusatzspannung aufweist.

4. Landwirtschaftliche Bodenbearbeitungsmaschine nach einem der vorhergehenden Ansprüche, wobei die Schardruck-Einstellmittel (20) die zu- und wegschaltbare Vorspannvorrichtung (14, 22) zum wahlweisen Beaufschlagen des jeweiligen Schartragarms (12) mit einer zusätzlichen Vorspannkraft umfassen.

5. Landwirtschaftliche Bodenbearbeitungsmaschine nach dem vorhergehenden Anspruch, wobei die Vorspannvorrichtung (14, 22) eine Federeinrichtung (15) umfasst, die einerseits an einem jeweiligen Schartragarm (12) und andererseits an einem rahmenträgerseitigen Abstützteil (18) anlenkbar ist.

6. Landwirtschaftliche Bodenbearbeitungsmaschine nach einem der beiden vorhergehenden Ansprüche, wobei die Vorspannvorrichtung (14, 22) einen blockierbaren Freilauf aufweist, so dass die Vorspannvorrichtung wahlweise freigängig schaltbar ist, um keine zusätzliche Vorspannkraft auf den jeweiligen Schartragarm zu geben und nicht freigängig, d.h. krafterzeugend und -übertragend schaltbar ist, um die Vorspannkraft auf den jeweiligen Schartragarm (12) zu geben.

7. Landwirtschaftliche Bodenbearbeitungsmaschine nach einem der Ansprüche 4-6, wobei Aktivierungs-/Deaktivierungsmittel zum Zu- und Wegschalten der Vorspannkraft lösbare Fixiermittel zum Lösen und Fixieren zumindest eines der Anlenkpunkte (16, 17) der Vorspannvorrichtung (14, 22) umfassen.

8. Landwirtschaftliche Bodenbearbeitungsmaschine nach einem der Ansprüche 4-7, wobei die Schardruck-Einstellmittel (20) ein Einstellelement (23) zum stufenlosen oder stufenweisen Einstellen der Höhe der Vorspannkraft der Vorspannvorrichtung (14, 22) aufweisen.

9. Landwirtschaftliche Bodenbearbeitungsmaschine nach einem der vorhergehenden Ansprüche, wobei die Schardruck-Einstellmittel (20) mehreren, eine Untergruppe der Reihe von Scharwerkzeugen (9) bildenden Scharwerkzeugen (9) zugeordnet ist und ein zentrales Einstellelement (23) zum zentralen Einstellen des Schardrucks aller zu dieser Untergruppe gehöriger Scharwerkzeuge (9) aufweist.

10. Landwirtschaftliche Bodenbearbeitungsmaschine nach einem der vorhergehenden Ansprüche, wobei die Schardruckeinstellmittel (20) mehrere Einzel-Einstellelemente zum individuellen Einstellen des Schardrucks mehrerer, einzelner Scharwerkzeuge (9) umfassen.

11. Landwirtschaftliche Bodenbearbeitungsmaschine nach einem der vorhergehenden Ansprüche, wobei ein Verteilersystem (4) für Drillsaat und eine Körnervereinzelungsvorrichtung (8) für Einzelkornsaat vorgesehen sind, wobei zumindest einige der Scharwerkzeuge (9) für die genannte Drillsaat vorgesehen und zumindest einige der Scharwerkzeuge (9) für die Einzelkornablage vorgesehen sind, und wobei die Schardruck-Einstellmittel (20) zum partiellen Erhöhen des Schardrucks für die Einzelkornsaat den Scharwerkzeugen (9), die für die Einzelkornsaat vorgesehen sind, zugeordnet sind.

## Claims

1. An agricultural soil cultivating machine, in particular a seeder, having at least one row of share tools (9) that are supported resiliently, in a yielding manner under the effect of a ground pressing force, at a frame support part (13) by means of share carrying arms (12) and having share pressure setting means (20) for the individual increasing and/or decreasing of the ground pressing force of at least one of said share tools (9) independently of the ground pressing force of at least another one of said share tools (9), wherein the share carrying arms (12) are acted on by a resilient suspension (21) having a basic tension to generate a basic share pressure toward the ground and at least one of the share carrying arms (12) can be acted on by an additional tensioning apparatus (14, 22) having an additional tension to generate an additional share pressure toward the ground, **characterized in that** the additional tensioning apparatus (14, 22) is configured as switchable in and out; and/or **in that** activation/deactivation means are provided for a selective activation and deactivation of the additional tensioning apparatus (14, 22).

2. An agricultural soil cultivating machine in accordance with the preceding claim, wherein the resilient suspension (21) comprises yielding squeeze support elements, in particular rubber squeeze supports, for a resiliently yielding support of the share carrying arms, wherein the resilient suspension (21) preferably allows pivot movements of the share carrying arms (12) about a horizontal axis transversely to the direction of travel.

3. An agricultural soil cultivating machine in accordance with one of the preceding claims, wherein the additional tensioning apparatus (14, 22) has a power control means (23) for a continuous or step-wise adjustment of the level of the additional tension acting on the respective share carrying arm.

4. An agricultural soil cultivating machine in accordance with one of the preceding claims, wherein the share pressure setting means (20) comprise the preloading apparatus (14, 22) that can be switched in and out for the selective action on the respective share carrying arm (12) by an additional preload force.

5. An agricultural soil cultivating machine in accordance with the preceding claim, wherein the preloading apparatus (14, 22) comprises a spring device (15) that can be pivotally connected to a respective share carrying arm (12), on the one hand, and to a support part (18) at the frame support side, on the other hand.

6. An agricultural soil cultivating machine in accordance with one of the two preceding claims, wherein the preloading apparatus (14, 22) has a blockable free-wheel so that the preloading apparatus can selectively be switched to freely moving in order not to provide any additional preloading force on the respective share carrying arm and to not freely moving, i.e. force-generating and force-transmitting, to provide the preloading force on the respective share carrying arm (12).

7. A agricultural soil cultivating machine in accordance with one of the claims 4 to 6, wherein activation/deactivation means for switching the preloading force in and out comprise releasable fixing means for releasing and fixing at least one of the pivotal connection points (16, 17) of the preloading apparatus (14, 22).

8. A agricultural soil cultivating machine in accordance with one of the claims 4 to 7, wherein the share pressure setting means (20) have a setting element (23) for the continuous or step-wise setting of the level of the preloading force of the preloading apparatus (14, 22).

9. An agricultural soil cultivating machine in accordance with one of the preceding claims, wherein the share pressure setting means (20) is associated with a plurality of share tools (9) forming a subassembly of the row of share tools (9) and has a central setting element (23) for the central setting of the share pressure of all the share tools (9) belonging to this subassembly.

10. An agricultural soil cultivating machine in accordance with one of the preceding claims, wherein the share setting means (20) comprise a plurality of individual setting elements for the individual setting of the share pressure of a plurality of individual share tools (9).

11. An agricultural soil cultivating machine in accordance with one of the preceding claims, wherein a distributor system (4) for drill seed and a grain separation apparatus (8) for individual grain seed are provided, wherein at least some of the share tools (9) are provided for said drill seed and at least some of the share tools (9) are provided for the individual grain deposition; and wherein the share pressure setting means (20) for the partial increase of the share pressure for the individual grain seed are associated with share tools (9) that are provided for the individual grain seed.

## Revendications

1. Machine agricole de traitement du sol, en particulier semoir, comprenant au moins une rangée d'outils à soc (9), qui sont montés flexibles sous l'effet d'une force de pression du sol, de manière élastique sur une partie poutre de châssis (13) au moyen de bras de support de soc (12), ainsi que des moyens de réglage de la pression du soc (20) pour l'augmentation et/ou la réduction individuelle de la force de pression d'appui au sol d'au moins un desdits outils à soc (9) indépendamment de la pression d'appui au sol d'au moins un autre desdits outils à soc (9), les bras de support de soc (12) étant soumis à l'action d'une contrainte élémentaire par une suspension élastique (21) pour générer une pression de soc élémentaire contre le sol, et au moins un des bras de support de soc (12) pouvant être soumis à l'action d'une contrainte supplémentaire par un dispositif de contrainte supplémentaire (14, 22) pour générer une pression de soc supplémentaire contre le sol, **caractérisée en ce que** le dispositif de contrainte supplémentaire (14, 22) est réalisé de manière activable et désactivable et/ou des moyens d'activation/désactivation sont prévus pour activer et désactiver au choix le dispositif de contrainte supplémentaire (14, 22).

2. Machine agricole de traitement du sol selon la revendication précédente, dans laquelle la suspension élastique (21) comprend des éléments de palier amortisseur flexibles, en particulier des paliers amortisseurs en caoutchouc, pour le support flexible de manière élastique des bras de support de soc, la suspension élastique (21) autorisant de préférence des mouvements oscillants des bras de support de soc (12) sur un axe horizontal, transversalement au sens de la marche.

3. Machine agricole de traitement du sol selon l'une des revendications précédentes, dans laquelle le dispositif de contrainte supplémentaire (14, 22) comporte un moyen de commande de force (23) pour le réglage continu ou par paliers de l'importance de la contrainte supplémentaire sollicitant le bras de support de soc respectif.

4. Machine agricole de traitement du sol selon l'une des revendications précédentes, dans laquelle les moyens de réglages de la pression du soc (20) comprennent le dispositif de précontrainte (14, 22) activable et désactivable pour soumettre au choix le bras de support de soc (12) respectif à l'action d'une force de précontrainte supplémentaire.

5. Machine agricole de traitement du sol selon la revendication précédente, dans laquelle le dispositif de précontrainte (14, 22) comprend un dispositif à ressort (15), qui peut être articulé d'un côté sur un bras de support de soc (12) respectif et de l'autre côté sur une partie d'appui (18) côté poutre de châssis.

6. Machine agricole de traitement du sol selon l'une des deux revendications précédentes, dans laquelle le dispositif de précontrainte (14, 22) comporte une mise en régime libre qui peut être bloquée, de telle sorte que le dispositif de précontrainte peut être commuté, au choix, en régime libre, pour ne fournir aucune force de précontrainte supplémentaire sur le bras de support de soc respectif et en régime non libre, c'est-à-dire de manière générant et transmettant une force, pour fournir la force de précontrainte sur le bras de support de soc (12) respectif.

7. Machine agricole de traitement du sol selon l'une des revendications 4 à 6, dans laquelle des moyens d'activation/désactivation pour l'activation et la désactivation de la force de précontrainte comprennent des moyens de fixation libérables pour libérer et fixer au moins un des points d'articulation (16, 17) du dispositif de précontrainte (14, 22).

8. Machine agricole de traitement du sol selon l'une des revendications 4 à 7, dans laquelle les moyens de réglage de la pression du soc (20) comportent un élément de réglage (23) pour le réglage continu ou par paliers de l'importance de la force de précontrainte du dispositif de précontrainte (14, 22).

9. Machine agricole de traitement du sol selon l'une des revendications précédentes, dans laquelle les moyens de réglage de la pression du soc (20) sont associés à plusieurs outils à soc (9) formant un sous-groupe de la rangée d'outils à soc (9) et comportent un élément de réglage (23) centralisé pour le réglage centralisé de la pression du soc de tous les outils à soc (9) appartenant à ce sous-groupe.

10. Machine agricole de traitement du sol selon l'une des revendications précédentes, dans laquelle les moyens de réglage de la pression du soc (20) comprennent plusieurs éléments de réglage individuels pour le réglage individuel de la pression du soc de plusieurs outils à soc (9) individuels.

11. Machine agricole de traitement du sol selon l'une des revendications précédentes, dans laquelle un système de distribution (4) pour le semis en ligne et un dispositif de séparation des graines (8) pour le semis graine par graine sont prévus, au moins quelques-uns des outils à soc (9) étant prévus pour ledit semis en ligne et au moins quelques-uns des outils à soc (9) étant prévus pour le dépôt graine par graine, et les moyens de réglage de la pression du soc (20) pour l'augmentation partielle de la pression du soc pour le semis graine par graine étant associés aux outils à soc (9) qui sont prévus pour le semis graine par graine.
